**Europäisches Patentamt**

**European Patent Office**

**Office européen des brevets**

(19)

(11) Veröffentlichungsnummer: **0 440 112 A2**

# (12) EUROPÄISCHE PATENTANMELDUNG

(21) Anmeldenummer: **91100996.7**

(22) Anmeldetag: **25.01.91**

(51) Int. Cl.⁵: **G02B 5/20**

(30) Priorität: **26.01.90 CH 252/90**

(43) Veröffentlichungstag der Anmeldung:
**07.08.91 Patentblatt 91/32**

(84) Benannte Vertragsstaaten:
**AT BE CH DE DK ES FR GB IT LI LU NL SE**

(71) Anmelder: **CERBERUS AG**
**Alte Landstrasse 411**
**CH-8708 Männedorf(CH)**

(72) Erfinder: **Müller, Kurt Albert**
**Tödihof 4**
**CH-8712 Stäfa(CH)**
Erfinder: **Forster, Martin**
**Sonnenbergstrasse 16**
**CH-8645 Jona(CH)**
Erfinder: **Wieser, Dieter**
**Mühlegasse 23**
**CH-8001 Zürich(CH)**
Erfinder: **Bischof, Felix**
**Schwenkelweg 15**
**CH-8645 Jona(CH)**

(74) Vertreter: **Tiemann, Ulrich, Dr.-Ing.**
**c/o Cerberus AG Patentabteilung Alte**
**Landstrasse 411**
**CH-8708 Männedorf(CH)**

(54) **Infrarotfilterscheibe für Strahlungsdetektoren.**

(57) Infrarotfilterscheiben für Strahlungsdetektoren, insbesondere für passive Infrarotdetektoren, weisen eine verbesserte Undurchlässigkeit für Störlicht auf, wenn sie aus einem für Infrarot-Strahlung durchlässigen Kunststoff bestehen, der Zinksulfidpartikel mit einer Partikelgröße im Bereich von 0,5 $\mu$m bis 50 $\mu$m, vorzugsweise in einer Konzentration von ca. 13 Gewichtsprozent, gleichmäßig darin verteilt, enthält. Die Streuwirkung der Pigmentpartikel wird noch verbessert, wenn die Oberfläche der Infrarotstreulichtscheiben eine Oberflächenrauhigkeit von circa 1 $\mu$m aufweist. Diese bewirkt eine zusätzliche Streuung von Licht mit einer Wellenlänge von < 2 $\mu$m, läßt jedoch Licht mit einer Wellenlänge von 4 $\mu$m bis 15 $\mu$m ungehindert passieren. Vor dem Vermischen sollte das Zinksulfid so gesiebt werden, daß eine Korngröße erhalten wird, die in dem gewünschten Bereich liegt.

EP 0 440 112 A2

## INFRAROTFILTERSCHEIBE FÜR STRAHLUNGSDETEKTOREN

Die Erfindung betrifft eine Infrarotfilterscheibe gemäß dem Oberbegriff des Patentanspruchs 1. Solche Infrarotfilterscheiben sind allgemein bekannt. Sie dienen als strahlungsdurchlässige Fenster zum Verschluß der Strahlungs-Eintritts-Öffnungen von Gehäusen von Strahlungsdetektoren, um im Inneren der Strahlungsdetektoren befindliche pyroelektrische Strahlungsempfänger vor Luftturbulenzen zu schützen.

Strahlungsdetektoren der genannten Art dienen unter anderem zur Erzeugung von elektrischen Signalen in Abhängigkeit von der auftreffenden Strahlung in Infrarot-Eindring-Detektions-Anlagen und in Flammenmeldern. Beispielsweise ist in der US-A-3,703,718 ein Infrarot-Eindring-Detektions-System beschrieben, bei dem zwischen einem Sensorelement und einem Spiegel zur Fokussierung von Infrarotstrahlung auf dem Sensorelement ein Filter angeordnet ist, das für elektromagnetische Strahlung im Bereich von 4,5 bis 20 $\mu$m (Körperstrahlung von Lebewesen) durchlässig ist. Als Beispiel für die Verwendung in Flammenmeldern sei die US-A-4,280,058 erwähnt, in der ein Flammenmelder beschrieben wird, der unterschiedliche Infrarotfilterscheiben verwendet, welche elektromagnetische Strahlung im Bereich von 4,1 bis 4,8 $\mu$m (Absorptionsbande von Kohlendioxid) oder im Bereich von 6 bis 6,7 $\mu$m (typische Strahlung von Störstrahlern) durchlassen.

Aus anderen Gebieten der Technik ist es bekannt, z.B. aus der DE-B1-24'43'164 (HOECHST), zum Schutz von Dokumenten oder Zahlungsmitteln thermoplastische Kunstoffolien einzusetzen, die ungelöste Teilchen enthalten, welche eingestrahlte, unsichtbare, elektromagnetische Strahlung in sichtbares Licht umwandeln. Einen Hinweis auf die Verwendung solcher fluoreszierender Stoffe für den Einsatz in Infrarotfilterscheiben für Strahlungsdetektoren, die einen bestimmten Durchlässigkeitsbereich im Infraot-Bereich aufweisen sollen, vermag die genannte Auslegeschrift nicht zu geben.

In der WO-A-88'04'025 (GRAVISSE) werden Filter beschrieben, welche Materialien enthalten, die im Infrarot-Bereich fluoreszieren und im Endeffekt den Durchgang von elektromagnetischer Strahlung in bestimmten Wellenlängenbereichen verhindern. Nach der Lehre dieses Patentes ist es nicht erforderlich, daß die Filter in bestimmten Spektralbereichen für elektromagnetische Strahlung durchlässig sind. Die beschriebenen fluoreszierenden Substanzen sind komplex strukturiert und wegen ihrer Strahlungsabsorption im Bereich von 6 bis 12 $\mu$m als Fenster für passive Infrarot-Eindringdetektoren ungeeignet.

In der weiter oben erwähnten US-A-3,703,718 ist ein Infrarot-Eindring-Detektions-System beschrieben, bei dem zur Fokussierung der Infrarotstrahlung auf das Sensor-Element sowohl Spiegel als auch Linsen dienen können. Insbesondere bei der Verwendung von Spiegeln ist der Innenraum des Gehäuses, in dem der Sensor angeordnet ist, weitgehend gegenüber der Atmosphäre offen. Zum Schutz des Sensors gegenüber Fluktuationen der Umgebungsluft etc. hat es sich als vorteilhaft erwiesen, die Eintrittsöffnung der Infrarot-Strahlung in das Innere des Gehäuses durch ein für Infrarotstrahlung durchlässiges Fenster zu verschließen. Hierfür besonders geeignet sind Fenster aus Polyethylen, das sich leicht im Extrusionsverfahren zu Folien oder im Spritzgußverfahren zu Platten verarbeiten läßt. Polyethylen hat den Vorteil, daß es in dem gewünschten Wellenlängenbereich für Infrarotstrahlung weitgehend durchlässig ist. Im Falle der Verwendung von Linsen als Fokussierungsmittel hat Polyethylen den weiteren Vorteil, daß die Linsen in Form von Fresnel-Linsen bei der Herstellung der Folien, bzw. Platten eingeprägt werden können.

Es ist bekannt (A.H.Pfund; Journal of the Optical Society of America, Vol. 24, 143 [1934]), Pulverfilme als Infrarot-Transmissions-Filter zu verwenden, z.B. solche mit Pulvern aus Quarz, Zinkoxid oder Magnesiumoxid. Es wurden Versuche (R.L.Henry; Journal of the Optical Society of America, Vol. 38, No. 9, 775 [1948]) mit verschiedenen Materialien (Quarz- und Zinksulfidpulver) unternommen, wobei die Pulverschichten auf Platten aus Glas oder Steinsalz untersucht wurden. Es wurde festgestellt, daß die Faktoren, die die Filtertransmission bestimmen, die Partikelkonzentration, die Partikelgrößenverteilung und die Brechungsindices von Partikelmaterial und Matrix sind.

An Fenster zum Verschluß von Strahlungseintrittsöffnungen von Infrarot-Eindring-Detektoren werden unter anderem folgende Anforderungen gestellt:

a) Sie sollen eine dem Detektor, d.h. der Umgebung angepaßte Färbung aufweisen,

b) sie sollen kurzwelliges Licht mit einer Wellenlänge < 4,0 $\mu$m durch Absorption, Reflexion oder Streuung vom Sensor fernhalten und

c) sie sollen Strahlung mit einer Wellenlänge im Bereich von 4 bis 15 $\mu$m möglichst ungehindert hindurchlassen.

In der Praxis werden als Fenster für Infrarot-Eindring-Detektoren meist Polyethylenfolien verwendet. Die Lichtstreuung erfolgt auf zwei Arten, einmal durch ein (farbiges oder farbloses) Pigment im Polyethylen als Matrix oder durch Mikrokristallite im Polyethylen. Die Mikrokristallite streuen bei geeigneter Dimensionierung kurzwellige Strahlung (sichtbares Licht), die Fenster erscheinen daher weiß; langwellige Strahlung (Infraotstrahlung im Bereich der Körperstrahlung von Lebewesen) lassen sie nahezu ungehindert durch.

Es sind verschiedene passive Infrarot-Eindring-Detektoren im Handel, bei denen die Lichtstreuung in den Eintrittsfenstern durch in die Polyethylenmatrix eingebettete Mikrokristallite erfolgt. Beispiele für Infrarot-Eindring-Detektoren mit Fenstern, die mit Weißpigmenten eingefärbt sind, sind z.B. die von der Cerberus AG vertriebenen PIR-Melder IR210 und IR212, deren Eintrittsfenster mit Titandioxid, das an sich farblos ist, aber durch Streuung weiß erscheint, gefärbt sind.

Um die Fehlalarmsicherheit von passiven Infrarot-Eindring-Detektoren zu erhöhen, wurde es im Laufe der Zeit immer mehr erforderlich, den Einfluß von Störlicht zu vermindern. Insbesondere sollen die passiven Infrarot-Eindring-Detektoren eine geringe Empfindlichkeit gegenüber Strahlung unter 3 bis 4 $\mu$m Wellenlänge für Flammendetektoren und unter 6 $\mu$m für passive Infrarot-Eindring-Detektoren aufweisen. Die unmittelbar auf den Sensoren verwendeten Filter, z.B. mit dünnen Mehrfach-Schichten aus dielektrischem Material überzogene Germanium- oder Siliciumplatten, sind sehr teuer und können mit vernünftigem finanziellen Aufwand nicht so ausgestaltet werden, daß sie den genannten Anforderungen genügen. Beispielsweise weisen die am häufigsten auf Sensoren für PIR-Melder verwendeten Filter im Wellenlängenbereich zwischen 1,6 $\mu$m und 2,5 $\mu$m noch Resttransmissionspeaks von einigen zehntel Promille auf. Da die verwendeten Sensoren u.a. pyroelektrische, also thermische Sensoren sind, deren Empfindlichkeit von der Wellenlänge unabhängig sind, kann das Licht einer starken Scheinwerferlampe in genügender Reststärke durch das Filter gelangen, um einen Alarm auszulösen.

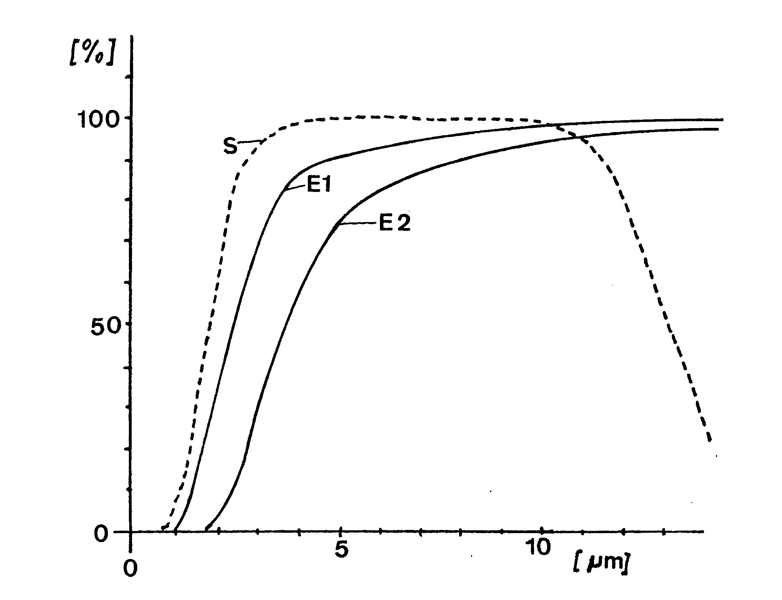

Die durch die Einfärbung der Polyethylenfolien mit Weißpigmenten, wie z.B. durch kommerziell erhältliches Titandioxid, erzielte Undurchlässigkeit der Fenster für Störlicht im Bereich von 1,6 $\mu$m bis 2,5 $\mu$m ist jedoch noch nicht hinreichend, um den Anforderungen an die Fehlalarmsicherheit von passiven Infrarot-Eindring-Detektoren zu genügen. Dazu sind einerseits die Partikel des erhältlichen Titandioxids zu klein, wodurch ihre Streuwirkung bei zu kleinen Wellenlängen eintritt, andererseits kann Titandioxid wegen seiner breiten Absorptionsbande im Bereich von > 11 $\mu$m mit einem ausgesprochenen Maximum bei 15 $\mu$m nur in kleinen Konzentrationen verwendet werden. Beispielsweise gibt eine einprozentige Konzentration in Polyethylen bereits eine Abschwächung des Intrusionssignals auf ca. 75 % (vgl. die Kurve S der beiliegenden Figur). Die Abschwächung der Störstrahlung im Bereich von 0,16 $\mu$m bis 2,5 $\mu$m ist bei dieser Konzentration zu gering, um wirksam das Störlicht zu unterdrücken.

Wird die Lichtstreuung in den Eintrittsfenstern durch die Einbettung von Mikrokristalliten in die Polyethylenmatrix erzeugt, so läßt sich durch geeignete Dimensionierung der Mikrokristallite kurzwellige Strahlung in gewünschter Weise streuen (die Fenster erscheinen weiß), wobei langwellige Strahlung nahezu ungehindert durchgelassen wird. Die Methode erscheint elegant, leider ist es aber verfahrenstechnisch nicht leicht, die Teilchengröße und Konzentration der Mikrokristallite den Anforderungen anzupassen. In der Praxis bestehen Fenster dieser Art meist aus zwei Lagen, einer dünnen Schicht aus Polyethylen mit Mikrokristalliten für die Lichtstreuung und einer dicken Schicht aus reinem Polyethylen zur Erzielung der nötigen Stabilität. Ferner sind dicke Polyethylenfolien mit der geforderten Kristallitkonzentration nicht spritzgießbar, da die beim Spritzgießen erforderlichen hohen Temperaturen die Mikrokristallite zum Verschwinden bringen. Es ist daher nicht möglich, nach dieser Methode auf technisch einfache Weise und preiswert geeignete Infrarotfilterscheiben herzustellen.

Von diesem Stand der Technik ausgehend liegt der Erfindung die Aufgabe zugrunde, die Nachteile der bisher verwendeten Infrarotfilterscheiben für Strahlungsdetektoren zu vermeiden und insbesondere solche Infrarotfilterscheiben für Strahlungsdetektoren zu schaffen, die eine verbesserte Undurchlässigkeit für Störlicht im Bereich zwischen 1,6 $\mu$m und 2,5 $\mu$m aufweisen, ohne daß die Durchlässigkeit für Infrarot-Strahlung im gewünschten Bereich von 4 $\mu$m bis 15 $\mu$m in unzulässiger Weise vermindert wird, wobei der Bereich von 4 $\mu$m bis 6 $\mu$m für Flammenmelder und der Bereich von 6 $\mu$m bis 15 $\mu$m für Infrarot-Eindring-Detektionssysteme gilt.

Diese Aufgabe wird bei einer Infrarotfilterscheibe der eingangs genannten Art durch die kennzeichnenden Merkmale des Patentanspruchs 1 gelöst. Bevorzugte Ausführungsformen der Erfindung und Ausgestaltungen sind in den abhängigen Patentansprüchen definiert.

Gemäß einer bevorzugten Ausführungsform besteht die Infrarotfilterscheibe aus Polyethylen und enthält Zinksulfidpartikel in einer Menge von 2 bis 50, vorzugsweise von 5 bis 30 Gewichtsprozent, insbesondere in einer Menge von etwa 13 Gewichtsprozent. Die Teilchengröße der Zinksulfidpartikel ist dabei vorzugsweise < 5 $\mu$m, insbesondere < 2 $\mu$m.

Gemäß einer weiteren bevorzugten Ausführungsform ist die Infrarotfilterscheibe als dünne, planparallele Platte ausgebildet. Eine besonders bevorzugte Ausführungsform der erfindungsgemäßen Infrarotfilterscheibe besteht darin, daß sie ein Oberflächenrauhigkeit von etwa 1 $\mu$m aufweist.

Eine bevorzugte Ausgestaltung der erfindungsgemäßen Infrarotfilterscheibe besteht darin, daß sie als optisches Element ausgebildet ist, das mindestens eine Fresnel-Linse umfaßt.

Die aus Polyethylen bestehende, erfindungsgemäße Infrarotfilterscheibe wird vorzugsweise als Abdeckfenster für passive Infrarot-Eindring-Detektoren verwendet. Zur Verwendung in Flammenmeldern besteht sie vorzugsweise aus einem Fluor-Kohlenstoff-Polymer, insbesondere aus Polytetrafluorethylen.

Eine Infrarotfilterscheibe gemäß vorliegender Erfindung wird gemäß folgendem Ausführungsbeispiel hergestellt:

## Beispiel

Eine erfindungsgemäße Infrarotfilterscheibe wird wie folgt erhalten: Zinksulfid, beispielsweise das von der Firma Fluka erhältliche, wird in geeigneter Weise gesiebt, so daß eine Korngröße im Bereich von 1 $\mu$m bis 5 $\mu$m erhalten wird. 85 Gewichtsteile dieses Zinksulfids und 15 Gewichtsteile Polyethylen-Granulat, z.B. Hostalen GB 6450 der Fa. Hoechst AG, werden in einer Compoundieranlage gemischt und granuliert. 15 Gewichtsteile der so erhaltenen granulierten Vormischung werden mit 85 Gewichtsteilen Polyethylengranulat vermischt. Daraus werden im normalen Extrusionsverfahren Polyethylenfenster in einer Dicke von 0,4 mm, die 12,7 Gewichtsprozent Zinksulfid enthalten, hergestellt (Folie E2).

Eine zweite erfindungsgemäße Infrarotfilterscheibe wird nach dem gleichen, vorstehend beschriebenen Verfahren hergestellt, nur werden an Stelle von 15 Gewichtsteilen der granulierten Vormischung aus Zinksulfid und Polyethylengranulat 1,18 Gewichtsteile verwendet, so daß die Polyetylenfolie 1 Gewichtsprozent Zinksulfid enthält (Folie E1).

Zum Vergleich wird nach dem gleichen bekannten Verfahren eine Infrarotfilterscheibe gemäß dem Stand der Technik hergestellt, die einen Gehalt an Titandioxid von 1 Gewichtsprozent aufweist (Folie S).

Die spektrale Durchlässigkeit der drei Folien wird im Bereich von 0,5 $\mu$m bis 15 $\mu$m gemessen. In der beiliegenden Figur sind die Transmissionen der Pigmente in Prozent gegen die Wellenlänge aufgetragen. Die Absorptionsbanden des Polyethylens sind dabei nicht berücksichtigt, da sie sich allen drei Kurven gleichmäßig überlagern.

Kurve S stellt die Transmissionskurve der Infrarotfilterscheibe des Standes der Technik, d.h. einer 0,4 mm dicken Poyethylenfolie mit 1 Gewichtsprozent Titandioxid, dar; Kurve E1 zeigt die Transmissionskurve einer erfindungsgemäßen Infrarotfilterscheibe, d.h. einer 0,4 mm dicken Poyethylenfolie mit 1 Gewichtsprozent Zinksulfid, während die Kurve E2 die Transmission einer erfindungsgemäßen Infrarotfilterscheibe mit einem Gehalt an 12,7 Gewichtsprozent Zinksulfid zeigt.

Es ist zu erkennen, daß die Transmission der Folie mit 1 Prozent Zinksulfid (Kurve E1) im Bereich des Störlichts zwischen 1 $\mu$m und 2,5 $\mu$m geringer ist als diejenige der Folie mit 1 Prozent Titandioxid (Kurve S). Der mittlere Teilchendurchmesser der Zinksulfidteilchen ist größer als bei kommerziell erhältlichem Titandioxid, und die Transmissionskurve ist daher nach größeren Wellenlängen hin verschoben. Ab circa 11 $\mu$m ist die Transmission nahezu 100 Prozent. Es ist daher ohne weiteres möglich, zur Verringerung der Transmission im Bereich des Störlichts, die Konzentration an Zinksulfidpartikel zu erhöhen, ohne daß die Durchlässigkeit für Infrarot-Strahlung im gewünschten Bereich von 4 $\mu$m bis 15 $\mu$m in unzulässiger Weise vermindert wird.

Das in einem typischen Fremdlichttest, z.B. in dem vom Verband der Sachversicherer in der Bundesrepublik Deutschland vorgeschriebenen Test, gemessene Restsignal schwächt sich durch die Streuwirkung von 12,7 Prozent Zinksulfid in einer 0,4 mm dicken Polyethylenfolie im Vergleich zu einer Pigmentierung mit Titandioxid auf 5 bis 20 Prozent ab, in Abhängigkeit von der Optik des passiven Infrarotdetektors, in dem es gemessen wird.

Abwandlungen der vorstehend beschriebenen Infrarotfilterscheibe sind im Rahmen der Erfindung gemäß den Ansprüchen möglich und dem Fachmann geläufig.

## Patentansprüche

1. Infrarotfilterscheibe für Strahlungsdetektoren, welche ein strahlungsundurchlässiges Gehäuse mit einer Eintrittsöffnung für die Strahlung und ein Sensorelement, das in Abhängigkeit von der Intensität der auftreffenden Strahlung ein elektrisches Signal abgibt, aufweisen, dadurch gekennzeichnet, daß sie aus einem für Infrarot-Strahlung durchlässigen Kunststoff besteht, der Zinksulfidpartikel mit einer Partikelgröße von 0,5 $\mu$m bis 50 $\mu$m gleichmäßig darin verteilt enthält.

2. Infrarotfilterscheibe Patentanspruch 1, dadurch gekennzeichnet, daß sie Zinksulfidpartikel in einer Menge von 1 bis 80 Gewichtsprozent, vorzugsweise von 2 bis 50 Gewichtsprozent, insbesondere von 5 bis 30 Gewichtsprozent, besonders bevorzugt in einer Menge von etwa 13 Gewichtsprozent, enthält.

3. Infrarotfilterscheibe gemäß einem der Patentansprüche 1 und 2, dadurch gekennzeichnet, daß sie Zinksulfidpartikel mit einer Partikelgröße von 0,5 $\mu$m bis 5 $\mu$m, vorzugsweise von 0,5 $\mu$m bis 2 $\mu$m, enthält.

4. Infrarotfilterscheibe gemäß einem der Patentansprüche 1 bis 3, dadurch gekennzeichnet, daß sie eine Oberflächenrauhigkeit von etwa 1 $\mu$m aufweist.

5. Infrarotfilterscheibe gemäß einem der Patentansprüche 1 bis 4, dadurch gekennzeichnet, daß sie aus Polyethylen besteht.

6. Infrarotfilterscheibe gemäß einem der Patentansprüche 1 bis 4, dadurch gekennzeichnet, daß sie aus einem Fluor-Chlor-Kohlenwassertoff-Polymer, vorzugsweise aus Polytetrafluorethylen besteht.

7. Verwendung der Infrarotfilterscheibe gemäß Patentanspruch 5 als strahlungsdurchlässiges Fenster zum Verschluß der Strahlungseintrittsöffnung eines passiven Infrarot-Eindring-Detektors.

8. Verwendung der Infrarotfilterscheibe gemäß Patentanspruch 6 als strahlungsdurchlässiges Fenster zum Verschluß der Strahlungseintrittsöffnung eines Flammenmelders.